# EUROPÄISCHE PATENTSCHRIFT

(11) **EP 0 829 816 B1**
(45) Veröffentlichungstag und Bekanntmachung des Hinweises auf die Patenterteilung: **26.10.2005**
(21) Anmeldenummer: 97114363.1
(22) Anmeldetag: 20.08.1997
(51) Int. Cl.: G06K 11/16

(54) **Eingabevorrichtung für ein menügeführtes Rechnersystem**
Input device for a menu-based computer system
Dispositif d'entrée de données pour un système d'ordinateur à menus

(30) Priorität: 14.09.1996 DE 19637487
(43) Veröffentlichungstag der Anmeldung: 18.03.1998
(73) Patentinhaber: HoKa Gesellschaft für Entwicklung und Vertrieb elektronischer Schaltungen mbH, 52146 Würselen-Bardenberg (DE)
(72) Erfinder: Steingrobe, Heinz-Hendrik Dipl.-Ing., 52074 Aachen (DE)
(74) Vertreter: Bauer, Dirk

(56) Entgegenhaltungen:
- EP-A- 0 012 138
- DE-A- 2 647 053
- DE-C- 4 306 855
- US-A- 4 054 746
- US-A- 4 418 242
- US-A- 4 570 033
- US-A- 5 450 348
- PATENT ABSTRACTS OF JAPAN vol. 012, no. 350 (P-760), 20.September 1988 & JP 63 106033 A (WACOM CO LTD), 11.Mai 1988,

## Beschreibung

Die Erfindung betrifft eine Eingabevorrichtung für ein menügeführtes Rechnersystem gemäß dem Oberbegriff des Anspruchs 1.

Derartige Eingabevorrichtungen sind allgemein bekannt, weit verbreitet und werden landläufig insgesamt als "Computer-Maus" oder kurz nur als "Maus" bezeichnet. Bei derartigen bekannten Mäusen befindet sich auf ihrer Unterseite eine gummierte Kugel, die bei einer Bewegung der Maus über das Tableau infolge eines Reibschlusses zwischen der Kugel und dem Tableau rotatorische Bewegungen mit derselben Weglänge ausführt. Aufgabe der Kugel ist es, die mechanischen Bewegungen der Maus zu erfassen und in ein zu den Bewegungen proportionales Signal umzuformen. Die Kugelbewegungen werden im Inneren der Maus auf zwei Wellen übertragen, mit deren Hilfe die Bewegungen optoelektronisch erfaßt und dann in einer standardisierten Signalform an den Rechner weitergeleitet werden.

Als nachteilig tritt jedoch bei diesen bekannten Eingabevorrichtungen in Erscheinung, daß deren mechanische Elemente insbesondere bei häufiger Benutzung oder widrigen Umgebungsbedingungen verschmutzen und/oder verschleißen. Besonders störungsanfällig ist dabei die auf der Unterseite der Maus befindliche Kugel. Wird die Maus zum Beispiel in einer durch Schmutz oder Staub belasteten Umgebung eingesetzt, so lagern sich auf der Kugel sehr schnell Schmutz- oder Staubpartikel ab. Hierdurch wird die mechanische Übertragung der Kugelbewegung an die Optoelektronik gestört. Infolgedessen beginnt der Mauszeiger auf dem Bildschirm zu springen, wodurch die Zuverlässigkeit der Bedienung der Eingabevorrichtung erheblich gestört wird. Meist ist eine umständliche und diffizile Reinigung der Maus unvermeidlich. Bei einem Einsatz der Maus in einer stark verschmutzten Umgebung wäre eine solche Reinigung in sehr kurzen Zeitabständen immer wieder erforderlich, weshalb sich die bekannten Eingabevorrichtungen für eine industrielle Verwendung unter widrigen Umweltbedingungen kaum eignen und sich bisher nicht durchsetzen konnten. Vielmehr ist der Einsatz der bekannten Mäuse als Eingabegeräte für menügeführte Anlagensteuerungen ausschließlich auf staubfreie und trockene Räume beschränkt.

Des weiteren zählen auch unter der Bezeichnung "Industrie-Maus" geführte Eingabesysteme zum Stand der Technik, die in ihrer Funktionsweise mit der eines sogenannten Joy-Sticks identisch sind. Die Ausführung dieser Joy-Sticks wurde lediglich den Anforderungen an rauhe Industrie-Umweltbedingungen angepaßt. Wie jedoch in vielfachen Tests nachgewiesen wurde, fällt die Positionierung des Mauszeigers mit Hilfe eines Joy-Sticks dem durchschnittlichen Bediener in der Regel sehr schwer. Um eine Bewegung des Mauszeigers zu erzielen, muß der Steuerknüppel des Joy-Sticks ausgelenkt werden. Diese Auslenkung muß so lange beibehalten werden, wie der Mauszeiger bewegt werden soll. Um die Zeigerbewegung zu stoppen, muß der Steuerknüppel wieder in seine Ursprungsposition zurückgebracht werden. Geschieht dies zu spät, etwa weil die Reaktionszeit zu groß ist, schießt der Mauszeiger über das gewünschte Ziel hinaus, so daß eine Korrektur der Mausposition durch ein Rückwärtsfahren erforderlich ist. Bei kleinen Zielflächen muß dieser Korrekturvorgang unter Umständen mehrfach wiederholt werden, bis das Ziel letztlich getroffen wird. Das Prinzip des Joy-Sticks ist somit für eine anwenderfreundliche Eingabe nicht geeignet, da bei ihm die Bewegung des Mauszeigers kein Abbild der Handbewegung darstellt, sondern mit Hilfe der Handbewegung ein geschwindigkeitsproportionaler Steuerbefehl gegeben wird.

Ferner sind auch Eingabevorrichtungen mit einem induktiven Wegerfassungssystem bekannt. Bei diesen Eingabevorrichtungen, die bisher ausschließlich im Bereich der Planung und Konstruktion (CAD/CAM-Anwendungen) eingesetzt werden, befindet sich vor dem eigentlichen Mausgehäuse eine Spule, mit der ganz gezielt bestimmte Stellen auf einem Tableau angefahren werden müssen. Wenn diese Stellen angefahren sind, kann durch Drücken einer Maustaste eine ganz bestimmte Aktion ausgelöst werden. Oftmals hat dabei das Mausgehäuse die Form eines Zeichenstiftes, in dessen Spitze eine Spule eingebaut ist. Auch diese bekannten Eingabevorrichtungen können die Anforderungen der Umsetzung der Handbewegung in ein wegstreckenproportionales Signal nur mit erheblichem technischen Aufwand erfüllen.

DE 43 06 855 C1 (entspricht dem US-Patent 5,450,348), gegen das die Ansprüche abgegrenzt wurden, offenbart eine Eingabevorrichtung (Digitalisier-Einrichtung) mit folgender Funktionsweise: Spulen in einem Digitalisier-Tablett werden mit phasenverschobenen Wechselspannungen beaufschlagt. Die Spulen sind als mäanderförmige Leiter (U-förmige Schleifen) in zwei Gruppen (für X- und Y-Koordinaten) angeordnet. Die Auswerte-Elektronik ist autonom in der Maus untergebracht; die Maus verfügt über keinerlei galvanische Verbindung zu der Schaltung im Panel.

Eine ähnliche Schaltung ist auch aus DE 26 47 053 (entspricht US 4,054,746) bekannt. In diesem elektromagnetischen Digitalisierbrett werden zwei Spulengruppen (X- und Y-Richtung) mit phasenverschobenen Wechselströmen gespeist. Die Maus ist mit einer Aufnahmespule ausgestattet. Zwei je sechsstellige Lage-Register der Auswerte-Elektronik speichern die ermittelten Koordinaten; dabei werden jeweils die oberen drei Stellen durch eine Grob-Messung erzeugt, die drei unteren Stellen zuvor durch Fein-Messung. Zwei Gruppen von Leiterbahnen werden mit phasenverschobenen Wechselströmen gespeist.

Der Erfindung liegt die Aufgabe zugrunde, eine Eingabevorrichtung für ein menügeführtes Rechnersystem zu schaffen, die sich auch für den industriellen Einsatz in einer stark verschmutzten Umgebung eignet und wie eine mechanische Maus mit Kugel eine Scroll-Funktion besizt sowie keine fehlerhaften Signale auch bei schwächeren Feldstärken des elektromagnetischen Wanderfeldes erzeugt.
Ausgehend von einer Eingabevorrichtung der eingangs beschriebenen Art wird die Aufgabe durch den Gegenstand des Anspruchs 1 gelöst.

Die erfindungsgemäße Eingabevorrichtung basiert somit auf einem Mausprinzip, bei dem das Tableau als Sender fungiert und die Maus als Empfänger arbeitet. In dem Tableau wird mittels der Leiterbahnen in zwei im wesentlichen senkrecht aufeinanderstehenden Richtungen jeweils ein elektrisches Wanderfeld erzeugt. Diese Wanderfelder weisen jeweils konstante Frequenzen f^{N} und f^{M} auf. Das in der Empfängerspule induzierte Signal entsteht durch Überlagerung der beiden im Tableau erzeugten Wanderfelder im Zeitmultiplexverfahren. Dieses Signal wird in je ein Teilsignal für die beiden Richtungen aufgeteilt. Die Phasenlage der jeweiligen Teilsignale, d.h. die Phasenverschiebung in bezug auf das zugeordnete Wanderfeld hängt direkt von der Position der Maus auf dem Tableau ab. Es ist somit ein proportionaler Zusammenhang zwischen der Position der Maus und der Phasenlage des jeweiligen Teilsignals vorhanden, der zur Erzeugung eines wegproportionalen Signals in Form eines Standardprotokolls für Mausschnittstellen geeignet ist.

Die erfindungsgemäße Eingabevorrichtung erlaubt dabei eine sehr hohe Auflösung für eine exakte Wegerfassung der Maus. So lassen sich Mausbewegungen auf dem Tableau im Bereich von 0,1 mm erfassen.

Durch die Technik der Phasendifferenzerfassung ist es möglich, das Erregerfeld mit einer vergleichsweise niedrigen Frequenz zu betreiben. Daher ist die abgestrahlte Leistung des Erregerfeldes wesentlich geringer als die des ebenfalls auf dem System der induktiven Erfassung arbeitenden Grafikeingabe-Tableaus.

Aufgrund des induktiven Wegerfassungssystems eignet sich die Eingabevorrichtung gemäß der Erfindung hervorragend für einen Einsatz in industrieller Umgebung. Die erfindungsgemäße induktive Maus läßt sich in einfacher Weise beständig gegen Wasser, Öl, Staub und Lösungsmittel ausbilden und ist zudem sehr einfach in ihrer Bedienung. Die Störungsanfälligkeit ist daher besonders gering, so daß mit der induktiven Maus auch ein Eingabegerät für menügeführte Rechnersysteme in stark schmutz- und feuchtigkeitsbelasteter Industrieumgebung zur Verfügung steht.

Gemäß einer Ausgestaltung der erfindungsgemäßen Eingabevorrichtung wird vorgeschlagen, daß die Leiterbahnen mäanderförmig und jeweils versetzt zueinander verlaufen.

Hierdurch läßt sich die nutzbare Größe des Tableaus leicht erhöhen, ohne daß die Anzahl n oder m der Leiterbahnen pro Gruppe erhöht werden müßte. Bei feststehendem n und m läßt sich die zur Verfügung stehende Tableaugröße ohne Änderung des Verschaltungsprinzips und auch ohne zusätzliche Elektronik sehr leicht variieren.

Des weiteren ist vorgesehen, das von der Empfängerspule empfangene Signal einem Verstärker und einem Filter zuzuführen, wodurch die Sicherheit des Auswertevorgangs erhöht werden kann.

Die Erfindung weiter ausgestaltend wird vorgeschlagen, daß zur Erzeugung der Wanderfelder und zur Auswertung der Signale der Empfängerspule jeweils Microcontroller vorgesehen sind.

Falls der Verfahrweg der Maus in die beiden senkrecht zueinanderstehenden Richtungen in der Tableauebene von diesem Microcontroller im Zeitmultiplexverfahren erfaßt wird, ergibt sich ein zuverlässiger und einfacher Aufbau der jeweiligen Schaltungen.

Wenn zur Signalauswertung HC-MOS ICs vorgesehen sind, wird eine sehr geringe Stromaufnahme erreicht, die kleiner als 10 mA bei +/- 5 VDC Spannung ist. Hierdurch kann die Anforderung einer sehr geringen Stromaufnahme erfüllt werden, wie sie aufgrund der zur Zeit üblichen PC-Mausschnittstellen notwendig ist.

Erfindungsgemäß wird vorgeschlagen, daß die Auswertung der Signale der Empfängerspule abgeschaltet wird, wenn die gemessene Feldstärke der Wanderfelder in der Empfängerspule einen wählbaren Grenzwert unterschreitet.

Die Amplitude des von der Empfängerspule empfangenen Signals ist abhängig von der Höhe der Maus über dem Tableau, da die Feldstärke der Wanderfelder mit zunehmender Entfernung von dem Tableau abnimmt. Durch ein Anheben der Maus vom Tableau kann somit die Positionserfassung der Maus abgeschaltet und durch ein Absenken erneut eingeschaltet werden. Dies ermöglicht ein "Scrollen" wie bei den bekannten mechanischen Mäusen, wodurch sich ein hoher Bedienungskomfort ergibt.

Dabei ist es besonders vorteilhaft, zur Überwachung der Amplitude des Signals der Empfängerspule einen Fensterdiskriminator vorzusehen.

Eine weitere Ausgestaltung der Erfindung besteht darin, daß die Wanderfelder Frequenzen f^{N} und f^{M} im Bereich von 5 kHz bis 60 kHz aufweisen.

Da das Erregerfeld mit einer derartig niedrigen Frequenz betrieben werden kann, ist die abgestrahlte Leistung wesentlich geringer als bei den auf dem Markt befindlichen elektrischen Grafikeingabe-Tableaus. Aufgrund der sich bei der erfindungsgemäßen induktiven Maus ergebenden geringen Feldstärken des elektromagnetischen Feldes lassen sich die Anforderungen der einschlägigen Gesetze für die elektromagnetische Verträglichkeit einhalten sowie eine Löschung von Disketten in der Nähe des Erregerfeldes ausschließen.

Sofern die Maus und das Tableau in Kunststoff eingegossen sind, sind sie damit von der Umwelt isoliert, so daß sich die Anforderungen der Norm IP 65 erfüllen lassen. Die zum Eingießen verwendeten Kunststoffe sind dabei elektrisch nicht leitend.

Ein weiterer Beitrag zur Verringerung der Stromaufnahme der erfindungsgemäßen Eingabevorrichtung läßt sich dadurch leisten, daß das Verhältnis von Einschaltzeit zu Ausschaltzeit des Wanderfeldes in dem Tableau zwischen 1 : 100 und 1 : 10000 beträgt. Somit wird eine Kompatibilität der induktiven Maus gemäß der Erfindung mit den gängigen PC-Schnittstellen erzielt.

Eine besonders vorteilhafte Weiterbildung der Eingabevorrichtung besteht darin, daß die Anzahl n der Leiterbahnen der Gruppe N und die Anzahl m der Leiterbahnen der Gruppe M jeweils 3 beträgt.

Diese Anzahl stellt einen optimalen Kompromiß zwischen dem erforderlichen Bauaufwand und der sicheren Detektierung der Phasenverschiebung zwischen dem Wanderfeld und dem in der Empfängerspule induzierten Signal dar.

Es ist des weiteren als besonders günstig anzusehen, wenn zur Erzeugung des Wanderfeldes ein rückgekoppeltes Schieberegister mit drei Flip-Flops vorgesehen ist, wobei jedes Flip-Flop ein um zwei Takte eines Taktgenerators verschobenes Signal mit einer Frequenz erzeugt, die einem Sechstel der Taktfrequenz entspricht.

Schließlich wird noch vorgeschlagen, daß die Empfängerspule eine Topfspule ist.

Die Erfindung wird nachfolgend anhand eines Ausführungsbeispiels einer Eingabevorrichtung, von der einzelne Baugruppen in der Zeichnung dargestellt sind, näher erläutert. Es zeigt:
- Figur 1: 3 mäanderförmig verlegte Leiterbahnen einer gemeinsamen Gruppe
- Figur 2: eine Schaltung zur Generierung von drei phasenveschobenen Wechselströmen zur Generierung des Wanderfeldes in den Leiterbahnen einer Gruppe sowie die sich ergebenden Verläufe der Phasensignale in Abhängigkeit von dem zugrundeliegenden Taktsignal und
- Figur 3: eine Schaltung zur Speicherung einer digitalen Maßzahl für die Phasendifferenz zweier Signale.

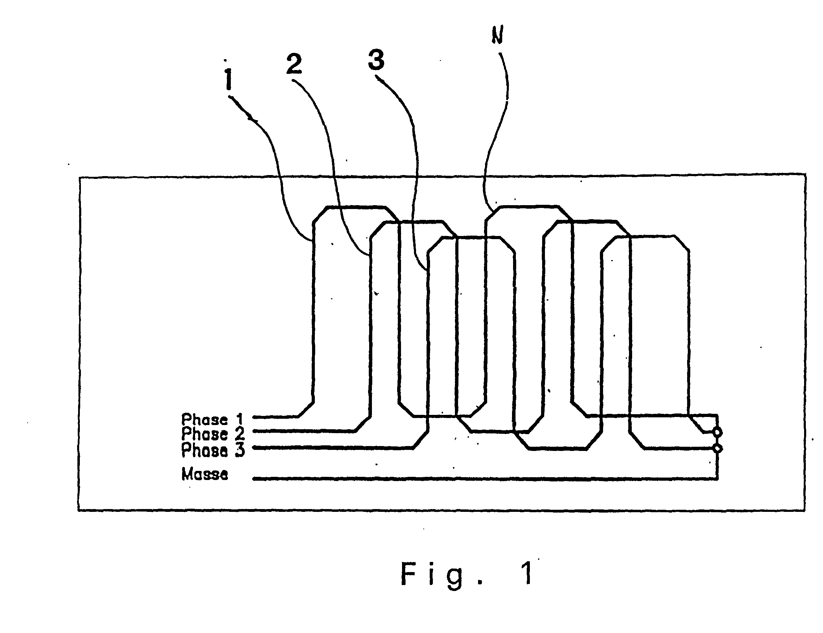

Figur 1 zeigt in einer schematischen Darstellung den Verlauf von drei jeweils mäanderförmig verlegten und versetzt zueinander angeordneten Leiterbahnen 1, 2, 3 der Gruppe N. Diese Gruppe N befindet sich auf der Oberseite einer Platine, wobei die Überschneidungen der Leiterbahnen 1, 2, 3 mittels Durchkontaktierungen realisiert werden, um eine elektrische Verbindung zwischen verschiedenen Leiterbahnen 1, 2 und 3 zu verhindern.

Auf der Unterseite der Platine befindet sich ebenfalls eine - in Figur 1 jedoch nicht sichtbare - Gruppe M von drei mäanderförmig versetzt zueinander angeordneten Leiterbahnen, die in bezug auf die drei Leiterbahnen 1, 2, 3 der Oberseite der Platine um 90° versetzt sind. Mit Hilfe der drei Leiterbahnen 1, 2, 3 wird eine 3-phasiges elektrisches Wanderfeld erzeugt, das senkrecht zu dem durch die auf der Unterseite angeordneten drei Leiterbahnen erzeugte elektrische Wanderfeld ausgerichtet ist. Das durch die drei Leiterbahnen 1, 2, 3 erzeugte Wanderfeld besitzt die Frequenz f^{N} und das durch die Leiterbahnen auf der Unterseite der Platine erzeugte Wanderfeld besitzt die Frequenz f^{M}.

Die Platine mit den Leiterbahnen auf der Ober- und Unterseite ist in einen elektrisch nicht leitenden Kunststoff eingegossen, so daß sich eine glatte, kratz- und stoßunempfindliche Oberfläche ergibt und die Leiterbahnen von außen nicht erkennbar sind. Auf der Oberseite eines derartig gebildeten Tableaus läßt sich eine mit einer Topfspule versehene Maus bewegen.

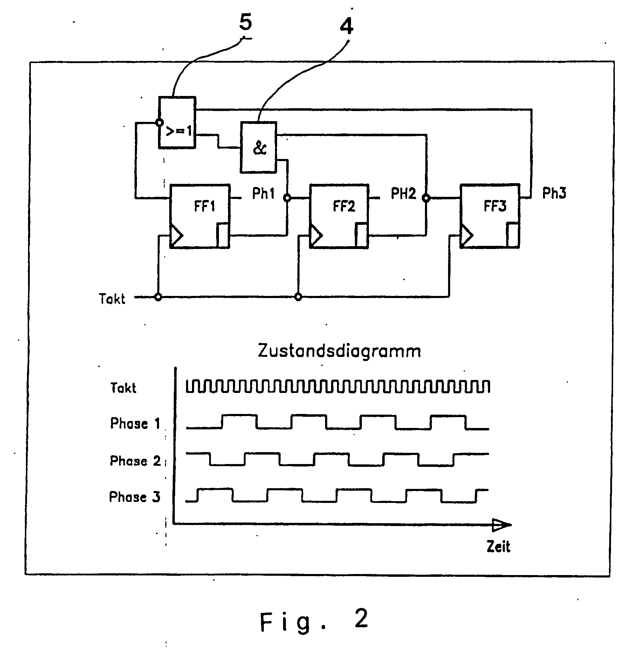

Figur 2 zeigt im oberen Bereich die zur Erzeugung eines 3-phasigen elektrischen Wanderfeldes mittels der Leiterbahnen 1, 2, 3 gemäß Figur 1 verwendete Schaltung. Bei dieser Schaltung handelt es sich um ein rückgekoppeltes Schieberegister, bei dem jeder Zustand invertiert weitergegeben wird. Jedes der drei Flip-Flops FF1, FF2, FF3 erzeugt dabei ein um zwei Takte verschobenes Phasensignal mit einer Frequenz, das einem Sechstel der Taktfrequenz entspricht. Mit Hilfe eines AND-Gatters 4 sowie eines NOR-Gatters 5 wird stets ein gültiger Startzustand erzwungen. Somit kann es keinen Zustand geben, in dem die Schaltung blockiert ist.

Das im unteren Bereich der Figur 2 abgebildete Zustandsdiagramm zeigt in der oberen Zeile den Zeitverlauf des Taktsignals. In den drei darunterliegenden Zeilen sind die Verläufe der zur Einspeisung in die drei Leiterbahnen 1, 2, 3 vorgesehenen Phasensignale dargestellt. Die Verschiebung zweier in benachbarte Leiterbahnen einzuspeisender Phasensignale beträgt jeweils ein Drittel deren Periodendauer, d.h. der zweifachen Periodendauer des Taktsignals.

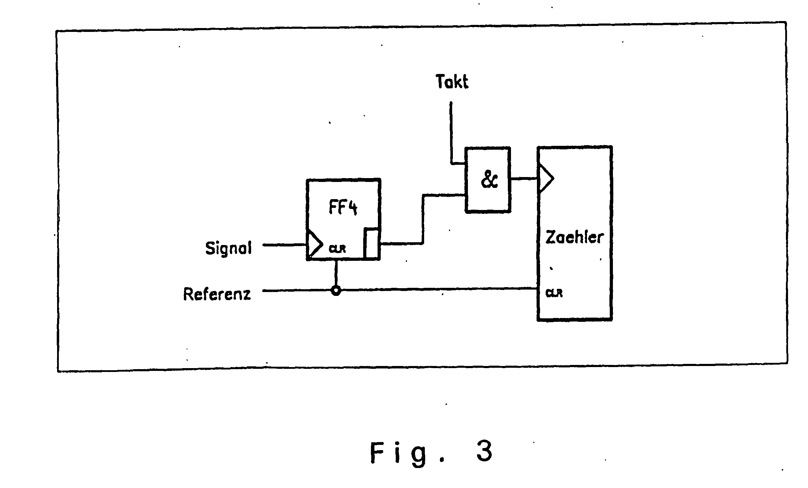

In Abhängigkeit von der jeweiligen Position der Maus auf dem Tableau, d.h. auch der in die Maus eingegossenen Topfspule, wird darin ein Signal induziert, dessen Phasenlage proportional mit dem Verschiebeweg der Maus variiert. Zur digitalen Erfassung der Phasendifferenz zwischen dem elektrischen Wanderfeld in dem Tableau und dem induzierten Signal in der Topfspule dient die in Figur 3 gezeigte Schaltung.

Mit Hilfe dieser Schaltung wird eine digitale Maßzahl für die Phasendifferenz zweier Signale gespeichert. Nach dem Löschen eines Flip-Flops FF4 und eines Zählers 6 durch ein synchrones Referenzsignal wird ein Tor zum Zählen eines höherfrequenten Taktsignals freigegeben. Je nach Phasenlage des Meßsignals wird dieses Tor durch Setzen des Flip-Flops FF4 wieder geschlossen. Die vom Zähler 6 gemessene Taktzahl ist dabei proportional zur Phasenlage des Meßsignals, d.h. zur Position der Maus auf dem Tableau.

## Patentansprüche

1. Eingabevorrichtung für ein menügeführtes Rechnersystem, bestehend aus einem Tableau und eine auf dessen Oberfläche bewegbaren und mit einem Rechner verbindbaren Maus, in der ihre von einem Bediener ausgeführten Bewegungen auf der Oberfläche des Tableaus in ein elektrisches und von dem Rechner verarbeitbares Signals in Form eines Standardprotokolls für Mausschnittstellen transformierbar sind, wobei
a) das Tableau mit zwei Gruppen (N), (M) von n bzw. m parallel zur Oberfläche des Tableaus angeordneten Leiterbahnen versehen ist, wobei n und m jeweils für eine natürliche Zahl ≥ 2 steht,
b) die Leiterbahnen jeweils derselben Gruppen jeweils im wesentlichen parallel verschoben zueinander angeordnet sind,
c) die Leiterbahnen der einen Gruppe (N) im wesentlichen senkrecht zu den Leiterbahnen der anderen Gruppe (M) angeordnet sind,
d) jede der n-Leiterbahnen der einen Gruppe (N) für eine Einleitung eines Wechselstrom mit einer konstanten ersten Frequenz (f^{N}) versorgbar ist, der in bezug auf die jeweils benachbarten Leiterbahnen dieser Gruppe (N) um einen Betrag von 360°/n phasenverschoben ist und jede der m-Leiterbahnen der Gruppe (M) für eine Einleitung eines Wechselstrom mit einer konstanten zweiten Frequenz (f^{M}) vorgesehen ist, der in bezug auf die jeweils benachbarten Leiterbahnen dieser Gruppe (M) um einen Betrag von 360°/m phasenverschoben ist, wodurch in dem Tableau jeweils ein n-phasiges und m-phasiges elektrisches Wanderfeld mit der ersten Frequenz (f^{N}) und der zweiten Frequenz (f^{M}) erzeugbar ist,
e) in der Maus eine Empfängerspule mit Signalverstärker und Filter angeordnet ist,
f) sich im Tableau eine Auswerteelektronik befindet, die das in der Empfängerspule empfangene Signal von der Maus in zwei Teilsignale aufteilt, wobei das erste Teilsignal durch Induktion des von den Leiterbahnen der ersten Gruppe (N) erfolgten Wanderfeldes und das zweite Teilsignal durch Induktion des von den Leiterbahnen der zweiten Gruppe (M) erzeugten Wanderfeldes entsteht und
g) durch jeweils einen Phasenvergleich zwischen dem Teilsignal und dem zugeordneten Wanderfeld ein zur Position der Maus auf dem Tableau proportionales Signal in Form eines Standardprotokolls für Mausschnittstellen erzeugbar ist,
**gekennzeichnet durch**
h) Mittel zum Abschalten der Auswertung der Signale der Empfängerspule, wenn die gemessene Feldstärke der Wanderfelder in der Empfängerspule einen wählbaren Grenzwert unterschreitet.

2. Eingabevorrichtung nach Anspruch 1, **dadurch gekennzeichnet, dass** die Leiterbahnen mäanderförmig und jeweils versetzt zueinander verlaufen.

3. Eingabevorrichtung nach Anspruch 1 oder 2, **dadurch gekennzeichnet, dass** das von der Empfängerspule empfangene Signal einem Verstärker und einem Filter zuführbar ist.

4. Eingabevorrichtung nach einem der Ansprüche 1 bis 3, **dadurch gekennzeichnet, dass** zur Erzeugung der Wanderfelder und zur Auswertung der Signale der Empfängerspule jeweils Microcontroller vorgesehen sind.

5. Eingabevorrichtung nach Anspruch 4, **dadurch gekennzeichnet, dass** zur Signalauswertung HC-MOS ICs vorgesehen sind.

6. Eingabevorrichtung nach Anspruch 1, **dadurch gekennzeichnet, dass** zur Überwachung der Amplitude des Signals der Empfängerspule ein Fensterdiskriminator vorgesehen ist.

7. Eingabevorrichtung nach einem der Ansprüche 1 bis 6, **dadurch gekennzeichnet, dass** die Wanderfelder Frequenzen (f^{N}, f^{M}) im Bereich von 20 kHz bis 60 kHz aufweisen.

8. Eingabevorrichtung nach einem der Ansprüche 1 bis 7, **dadurch gekennzeichnet, dass** die Maus und das Tableau in Kunststoff eingegossen oder überzogen sind.

9. Eingabevorrichtung nach einem der Ansprüche 1 bis 8, **dadurch gekennzeichnet, dass** das Verhältnis von Einschaltzeit zu Ausschaltzeit des Wanderfeldes in dem Tableau zwischen 1 : 100 und 1 : 10000 beträgt.

10. Eingabevorrichtung nach einem der Ansprüche 1 bis 9, **dadurch gekennzeichnet, dass** die Anzahl n der Leiterbahnen der einen Gruppe (N) und die Anzahl m der Leiterbahnen der anderen Gruppe (M) jeweils drei beträgt.

11. Eingabevorrichtung nach Anspruch 10, **dadurch gekennzeichnet, dass** zur Erzeugung eines Wanderfeldes ein rückgekoppeltes Schieberegister mit drei Flip-Flops vorgesehen ist, wobei jedes Flip-Flop ein um zwei Takte eines Taktgenerators verschobenes Signal mit einer Frequenz erzeugt, die einem Sechstel der Taktfrequenz entspricht.

12. Eingabevorrichtung nach einem der Ansprüche 1 bis 11, **dadurch gekennzeichnet, dass** die Empfängerspule eine Topfspule ist.

## Claims

1. An input device for a menu-based computer system, consisting of a tablet and a mouse which is movable on its surface and can be connected with a computer, in which its movements performed by a user on the surface of the tablet can be transformed into an electric signal which can be processed by the computer in the form of a standard protocol for mouse interfaces, with
a) the tablet being provided with two groups (N), (M) of n or m strip conductors arranged parallel to the surface of the tablet, with n and m each being representative of a natural number ≥ 2;
b) the strip conductors each being assigned to the same group displaced substantially parallel with respect to each other;
c) the strip conductors of the one group (N) being arranged substantially perpendicular to the strip conductors of the other group (M);
d) each of the n strip conductors of the one group (N) being supplied for the introduction of an alternating current with a constant first frequency (f^{N}), which current is phase-displaced by an amount of 360°/n with respect to the respective adjacent strip conductors of said group (N), and each of the m strip conductors of the group (M) being provided for the introduction of an alternating current with a constant second frequency (f^{M}), which current is phase-displaced by an amount of 360°/n with respect to the respective adjacent strip conductors of said group (M), as a result of which an n-phase and an m-phase traveling electric field with the first frequency (f^{N}) and the second frequency (f^{M}) can be produced;
e) a receiver coil with signal amplifier and filter being arranged in the mouse;
f) an electronic evaluating system being situated in the tablet, which electronic system divides the signal received by the receiver coil from the mouse into two partial signals, with the first partial signal being obtained by induction of the traveling field produced by the strip conductors of the first group (N) and the second partial signal being obtained by induction of the traveling field generated by the strip conductors of the second group (M), and
g) a signal proportional to the position of the mouse on the tablet in the form of a standard protocol for mouse interfaces being producible by a phase comparison each between the partial signal and the associated traveling field;
**characterized by**
h) means for deactivating the evaluation of the signals of the receiver coil once the measured field strength of the traveling fields falls below a selectable threshold value in the receiver coil.

2. An input device according to claim 1, **characterized in that** the strip conductors extend in a meandering fashion and are mutually offset relative to each other.

3. An input device according to claim 1 or 2, **characterized in that** the signal received by the receiver coil can be supplied to an amplifier and a filter

4. An input device according to one of the claims 1 to 3, **characterized in that** microcontrollers are provided each for producing the traveling fields and for evaluating the signals of the receiver coil.

5. An input device according to claim 4, **characterized in that** HC-MOS ICs are provided for signal evaluation.

6. An input device according to claim 1, **characterized in that** a window discriminator is provided for monitoring the amplitude of the signal of the receiver coil.

7. An input device according to one of the claims 1 to 6, **characterized in that** the traveling fields have frequencies (f^{N}, f^{M}) in the range of 20 kHz to 60 kHz.

8. An input device according to one of the claims 1 to 7, **characterized in that** the mouse and the tablet are cast or covered in plastic.

9. An input device according to one of the claims 1 to 8, **characterized in that** the ratio of on-time to off-time of the traveling field in the tablet is between 1:100 and 1:10000.

10. An input device according to one of the claims 1 to 9, **characterized in that** the number n of the strip conductors of the one group (N) and the number m of the strip conductors of the other group (M) is three each.

11. An input device according to claim 10, **characterized in that** a closed-loop shift register with three flip-flops is provided for producing a traveling field, with each flip-flop producing a signal displaced by two cycles of a clock generator with a frequency corresponding to one-sixth of the clock frequency.

12. An input device according to one of the claims 1 to 11, **characterized in that** the receiver coil is a pot coil.

## Revendications

1. Dispositif d'entrée de données pour un système d'ordinateur à menus, composé d'un tableau et d'une souris pouvant être déplacée sur la surface de celui-ci et reliée à un ordinateur, dans laquelle les mouvements effectués par un utilisateur sur la surface du tableau peuvent être transformés en un signal électrique pouvant être traité par l'ordinateur sous la forme d'un protocole standard pour interfaces de souris, dans lequel
a) le tableau est doté de deux groupes (N, M) de n et m pistes conductrices parallèles à la surface du tableau, n et m étant des nombres naturels qui sont chacun égal ou supérieur à 2,
b) les pistes conductrices de chaque groupe sont sensiblement décalées parallèlement l'une à l'autre,
c) les pistes conductrices d'un groupe (N) sont sensiblement perpendiculaires aux pistes conductrices de l'autre groupe (M),
d) chacune des n pistes conductrices d'un groupe (N) peut être alimentée avec un courant alternatif sous une première fréquence constante (f^{N}) déphasée de 360°/n par rapport aux pistes conductrices voisines de ce groupe (N) et chacune des m pistes conductrices du groupe (M) peut être alimentée avec un courant alternatif sous une seconde fréquence constante (f^{M}) déphasée de 360°/m par rapport aux pistes conductrices voisines de ce groupe (M), ce qui permet de créer dans le tableau un champ électrique progressif à n et m phases avec la première fréquence (f^{N}) et la seconde fréquence (f^{M}),
e) une bobine réceptrice avec amplificateur de signaux et filtre est disposée dans la souris,
f) le tableau contient une électronique d'interprétation qui partage le signal de la souris reçu dans la bobine réceptrice en deux signaux partiels, le premier signal partiel étant produit par induction du champ progressif créé par les pistes conductrices du premier groupe (N) et le second signal partiel par induction du champ progressif créé par les pistes conductrices du second groupe (M), et
g) un signal proportionnel à la position de la souris sur le tableau peut être produit par comparaison de phase entre le signal partiel et le champ progressif correspondant sous la forme d'un protocole standard pour interfaces de souris,
**caractérisé en ce qu'**il comporte
h) des moyens pour arrêter l'interprétation des signaux de la bobine de réception lorsque l'intensité mesurée des champs progressifs dans la bobine de réception est inférieure à une valeur limite sélectionnable.

2. Dispositif d'entrée de données selon la revendication 1, **caractérisé en ce que** les pistes conductrices sont en méandres et décalées les unes par rapport aux autres.

3. Dispositif d'entrée de données selon la revendication 1 ou 2, **caractérisé en ce que** le signal capté par la bobine de réception peut être amené à un amplificateur et à un filtre.

4. Dispositif d'entrée de données selon l'une quelconque des revendications 1 à 3, **caractérisé en ce que** des microcontrôleurs sont prévus pour produire les champs progressifs et pour interpréter les signaux de la bobine de réception.

5. Dispositif d'entrée de données selon la revendication 4, **caractérisé en ce que** des circuits intégrés HC-MOS sont prévus pour l'interprétation des signaux.

6. Dispositif d'entrée de données selon la revendication 1, **caractérisé en ce qu'**un discriminateur à fenêtre est prévu pour surveiller l'amplitude du signal de la bobine de réception.

7. Dispositif d'entrée de données selon l'une quelconque des revendications 1 à 6, **caractérisé en ce que** les champs progressifs ont des fréquences (f^{N}, f^{M}) de l'ordre de 20 kHz à 60 kHz.

8. Dispositif d'entrée de données selon l'une quelconque des revendications 1 à 7, **caractérisé en ce que** la souris et le tableau sont encapsulés ou enrobés dans du plastique.

9. Dispositif d'entrée de données selon l'une quelconque des revendications 1 à 8, **caractérisé en ce que** le rapport entre le temps d'activité et le temps d'inactivité du champ progressif dans le tableau est compris entre 1 pour 100 et 1 pour 10000.

10. Dispositif d'entrée de données selon l'une quelconque des revendications 1 à 9, **caractérisé en ce que** le nombre n des pistes conductrices d'un groupe (N) et le nombre m des pistes conductrices de l'autre groupe (M) est égal à trois.

11. Dispositif d'entrée de données selon la revendication 10, **caractérisé en ce que** pour produire un champ progressif, il est prévu un registre à décalage rétroactif pourvu de trois bascules, chaque bascule produisant un signal décalé de deux impulsions d'un générateur d'impulsions selon une fréquence correspondant à un sixième de la fréquence d'impulsions.

12. Dispositif d'entrée de données selon l'une quelconque des revendications 1 à 11, **caractérisé en ce que** la bobine de réception est une bobine à noyau en pot.
